# EUROPEAN PATENT APPLICATION

(11) **EP 4 443 565 A1**
(43) Date of publication of application: **09.10.2024**
(21) Application number: 22901159.8
(22) Date of filing: 22.11.2022
(51) Int. Cl.: H01M 4/62, H01B 1/24, H01M 4/13, H01M 4/134, H01M 4/139, H01M 4/1395, H01M 10/052, H01M 10/0566

(54) **CONDUCTIVE MATERIAL PASTE FOR NON-AQUEOUS ELECTROLYTE SECONDARY BATTERY, SLURRY COMPOSITION FOR NON-AQUEOUS ELECTROLYTE SECONDARY BATTERY NEGATIVE ELECTRODE, NEGATIVE ELECTRODE FOR NON-AQUEOUS ELECTROLYTE SECONDARY BATTERY, AND NON-AQUEOUS ELECTROLYTE SECONDARY BATTERY**

(30) Priority: 30.11.2021 JP 2021194991
(71) Applicant: Zeon Corporation, Tokyo 100-8246 (JP)
(72) Inventor: OSHIMA, Hiroki, Tokyo 100-8246 (JP); YAMAMOTO, Norikazu, Tokyo 100-8246 (JP)
(74) Representative: Maiwald GmbH
(86) International application number: PCT/JP2022/043251
(87) International publication number: WO 2023/100726

(57) **Abstract**

Provided is a conductive material paste for a non-aqueous electrolyte solution secondary battery that is capable of providing a non-aqueous electrolyte solution secondary battery having excellent electrolyte solution injectability, low-temperature characteristics, and cycle characteristics. The conductive material paste for a non-aqueous electrolyte solution secondary battery contains carbon nanotubes, acidic group-containing cellulose nanofibers, and water. A mass ratio of the acidic group-containing cellulose nanofibers relative to the carbon nanotubes (acidic group-containing cellulose nanofibers/carbon nanotubes) is not less than 0.3 and not more than 4.

## Description

### TECHNICAL FIELD

The present disclosure relates to a conductive material paste for a non-aqueous electrolyte solution secondary battery, a slurry composition for a non-aqueous electrolyte solution secondary battery negative electrode, a negative electrode for a non-aqueous electrolyte solution secondary battery, and a non-aqueous electrolyte solution secondary battery.

### BACKGROUND

Non-aqueous electrolyte solution secondary batteries (hereinafter, also referred to simply as "secondary batteries") such as lithium ion secondary batteries have characteristics such as compact size, light weight, high energy-density, and the ability to be repeatedly charged and discharged, and are used in a wide range of applications. An electrode for a non-aqueous electrolyte solution secondary battery may, for example, include a current collector and an electrode mixed material layer formed by drying a slurry composition for a non-aqueous electrolyte solution secondary battery electrode on the current collector.

In recent years, fibrous conductive carbons such as carbon nanotubes (hereinafter, also abbreviated as "CNTs") have been used as conductive materials in the formation of electrode mixed material layers. In regards to the formation of an electrode mixed material layer using a fibrous conductive carbon, a technique of premixing the fibrous conductive carbon and a dispersant to obtain a conductive material paste for a non-aqueous electrolyte solution secondary battery electrode and then combining the obtained conductive material paste with an electrode active material such as a silicon-based active material to produce a slurry composition for a non-aqueous electrolyte solution secondary battery electrode has been proposed with the aim of obtaining an electrode mixed material layer in which the fibrous conductive carbon is dispersed well (for example, refer to Patent Literature (PTL) 1).

### CITATION LIST

### Patent Literature

PTL 1: WO2020/196115A1

### SUMMARY

### (Technical Problem)

In production of a secondary battery, there is demand for excellent injectability of electrolyte solution (hereinafter, also referred to simply as "electrolyte solution injectability of a secondary battery"). There is also demand for a secondary battery to have excellent low-temperature characteristics and cycle characteristics.

However, there is room for improvement in the conventional technique described above in terms of ensuring sufficiently high cycle characteristics of a secondary battery while also improving electrolyte solution injectability and low-temperature characteristics of the secondary battery.

Accordingly, one object of the present disclosure is to provide a conductive material paste for a non-aqueous electrolyte solution secondary battery that is capable of providing a non-aqueous electrolyte solution secondary battery having excellent electrolyte solution injectability, low-temperature characteristics, and cycle characteristics.

Another object of the present disclosure is to provide a slurry composition for a non-aqueous electrolyte solution secondary battery negative electrode that is capable of providing a non-aqueous electrolyte solution secondary battery having excellent electrolyte solution injectability, low-temperature characteristics, and cycle characteristics.

Another object of the present disclosure is to provide a negative electrode for a non-aqueous electrolyte solution secondary battery that is capable of providing a non-aqueous electrolyte solution secondary battery having excellent electrolyte solution inj ectability, low-temperature characteristics, and cycle characteristics.

Another object of the present disclosure is to provide a non-aqueous electrolyte solution secondary battery that has excellent electrolyte solution injectability, low-temperature characteristics, and cycle characteristics.

### (Solution to Problem)

The inventors conducted diligent investigation with the aim of solving the problem set forth above. The inventors discovered that by using a conductive material paste for a non-aqueous electrolyte solution secondary battery that contains carbon nanotubes, acidic group-containing cellulose nanofibers, and water as a dispersion medium and in which a mass ratio of the acidic group-containing cellulose nanofibers relative to the carbon nanotubes is within a specific range, it is possible to provide a non-aqueous electrolyte solution secondary battery having excellent electrolyte solution injectability, low-temperature characteristics, and cycle characteristics, and, in this manner, completed the present disclosure.

Specifically, with the aim of advantageously solving the problem set forth above, [1] a presently disclosed conductive material paste for a non-aqueous electrolyte solution secondary battery comprises carbon nanotubes, acidic group-containing cellulose nanofibers, and water, wherein
a mass ratio of the acidic group-containing cellulose nanofibers relative to the carbon nanotubes, in terms of acidic group-containing cellulose nanofibers/carbon nanotubes, is not less than 0.3 and not more than 4.

By using a conductive material paste for a non-aqueous electrolyte solution secondary battery that contains carbon nanotubes, acidic group-containing cellulose nanofibers, and water and in which a mass ratio of the acidic group-containing cellulose nanofibers relative to the carbon nanotubes is within a specific range in this manner, it is possible to provide a non-aqueous electrolyte solution secondary battery having excellent electrolyte solution injectability, low-temperature characteristics, and cycle characteristics.

[2] In the conductive material paste for a non-aqueous electrolyte solution secondary battery according to the foregoing [1], the carbon nanotubes preferably have an average number of walls of 2.5 or less.

By using carbon nanotubes having an average number of walls that is not more than the specific value set forth above, it is possible to further improve cycle characteristics of a non-aqueous electrolyte solution secondary battery.

Note that the "average number of walls" of carbon nanotubes referred to in the present disclosure can be determined by measuring the number of walls of each of 100 randomly selected CNTs using a transmission electron microscope (TEM) and then calculating an average value thereof.

[3] The conductive material paste for a non-aqueous electrolyte solution secondary battery according to the foregoing [1] or [2] preferably comprises a structure in which the cellulose nanofibers are adsorbed to surfaces of the carbon nanotubes.

When the conductive material paste includes a structure in which the acidic group-containing cellulose nanofibers are adsorbed to surfaces of the CNTs, dispersion stability of the conductive material paste and viscosity stability of a slurry composition containing the conductive material paste can be increased, and electrolyte solution injectability, cycle characteristics, and low-temperature characteristics of a non-aqueous electrolyte solution secondary battery can be further improved.

[4] In the conductive material paste for a non-aqueous electrolyte solution secondary battery according to any one of the foregoing [1] to [3], the acidic group-containing cellulose nanofibers preferably include either or both of a carboxyl group and a sulfo group.

By using acidic group-containing cellulose nanofibers that include either or both of a carboxyl group and a sulfo group, it is possible to increase dispersion stability of the conductive material paste and viscosity stability of a slurry composition containing the conductive material paste, and it is also possible to further improve electrolyte solution injectability, cycle characteristics, and low-temperature characteristics of a non-aqueous electrolyte solution secondary battery.

[5] The conductive material paste for a non-aqueous electrolyte solution secondary battery according to any one of the foregoing [1] to [4] preferably further comprises a dispersant including either or both of a carboxyl group and a sulfo group.

By further using a dispersant that includes either or both of a carboxyl group and a sulfo group, it is possible to increase dispersion stability of the conductive material paste and viscosity stability of a slurry composition containing the conductive material paste, and it is also possible to further improve cycle characteristics and low-temperature characteristics of a non-aqueous electrolyte solution secondary battery.

[6] In the conductive material paste for a non-aqueous electrolyte solution secondary battery according to any one of the foregoing [1] to [5], the carbon nanotubes preferably have a G/D ratio of G band peak intensity relative to D band peak intensity of 2.1 or more in a Raman spectrum.

By using carbon nanotubes having a G/D ratio that is not less than the specific value set forth above, it is possible to further improve cycle characteristics of a non-aqueous electrolyte solution secondary battery.

Note that the "G/D ratio" of carbon nanotubes referred to in the present disclosure can be determined by measuring a Raman spectrum of the CNTs using a microscopic laser Raman spectrophotometer (Nicolet Almega XR produced by Thermo Fisher Scientific), determining the intensity of a G band peak observed near 1590 cm⁻¹ and the intensity of a D band peak observed near 1340 cm⁻¹ in the obtained Raman spectrum, and then calculating a ratio of these intensities.

[7] In the conductive material paste for a non-aqueous electrolyte solution secondary battery according to any one of the foregoing [1] to [6], the acidic group-containing cellulose nanofibers preferably have an average diameter of not less than 2 nm and not more than 30 nm. By using acidic group-containing cellulose nanofibers having an average diameter that is within the specific range set forth above, it is possible to increase dispersion stability of the conductive material paste and viscosity stability of a slurry composition containing the conductive material paste, and it is also possible to further improve cycle characteristics of a non-aqueous electrolyte solution secondary battery.

Note that the "average diameter" of acidic group-containing cellulose nanofibers referred to in the present disclosure can be determined by measuring the diameter (external diameter) of each of 100 randomly selected acidic group-containing cellulose nanofibers using a transmission electron microscope (TEM) and then calculating an average value thereof.

[8] In the conductive material paste for a non-aqueous electrolyte solution secondary battery according to any one of the foregoing [1] to [7], the carbon nanotubes preferably have an average diameter of not less than 1.5 nm and not more than 8.0 nm. By using CNTs having an average diameter that is within the specific range set forth above, it is possible to increase dispersion stability of the conductive material paste, and it is also possible to further improve cycle characteristics of a non-aqueous electrolyte solution secondary battery.

Note that the "average diameter" of carbon nanotubes referred to in the present disclosure can be determined by measuring the diameter (external diameter) of each of 100 randomly selected CNTs using a transmission electron microscope (TEM) and then calculating an average value thereof.

[9] In the conductive material paste for a non-aqueous electrolyte solution secondary battery according to any one of the foregoing [1] to [8], a volume-average particle diameter D50 of particles contained in the conductive material paste for a non-aqueous electrolyte solution secondary battery is preferably not less than 0.5 µm and not more than 20.0 µm.

Note that the "volume-average particle diameter D50" referred to in the present disclosure is the particle diameter at which cumulative volume calculated from a small diameter end in a particle size distribution (by volume) measured by laser diffraction reaches 50%.

[10] In the conductive material paste for a non-aqueous electrolyte solution secondary battery according to any one of the foregoing [1] to [9], the mass ratio of the acidic group-containing cellulose nanofibers relative to the carbon nanotubes, in terms of acidic group-containing cellulose nanofibers/carbon nanotubes, is preferably not less than 0.6 and not more than 2. When the mass ratio of the acidic group-containing cellulose nanofibers relative to the carbon nanotubes (acidic group-containing cellulose nanofibers/carbon nanotubes) is within the specific range set forth above, electrolyte solution injectability, cycle characteristics, and low-temperature characteristics of a non-aqueous electrolyte solution secondary battery can be further improved.

Moreover, with the aim of advantageously solving the problem set forth above, [11] a presently disclosed slurry composition for a non-aqueous electrolyte solution secondary battery negative electrode comprises: the conductive material paste for a non-aqueous electrolyte solution secondary battery according to any one of the foregoing [1] to [10]; and a silicon-based active material.

By using a slurry composition for a non-aqueous electrolyte solution secondary battery negative electrode that contains any one of the conductive material pastes for a non-aqueous electrolyte solution secondary battery set forth above and a silicon-based active material in this manner, it is possible to provide a non-aqueous electrolyte solution secondary battery having excellent electrolyte solution injectability, low-temperature characteristics, and cycle characteristics.

Furthermore, with the aim of advantageously solving the problem set forth above, [12] a presently disclosed negative electrode for a non-aqueous electrolyte solution secondary battery comprises a negative electrode mixed material layer formed using the slurry composition for a non-aqueous electrolyte solution secondary battery negative electrode according to the foregoing [11].

By using a negative electrode for a non-aqueous electrolyte solution secondary battery that includes a negative electrode mixed material layer formed using the slurry composition for a non-aqueous electrolyte solution secondary battery negative electrode set forth above in this manner, it is possible to provide a non-aqueous electrolyte solution secondary battery having excellent electrolyte solution inj ectability, low-temperature characteristics, and cycle characteristics.

Also, with the aim of advantageously solving the problem set forth above, [13] a presently disclosed non-aqueous electrolyte solution secondary battery comprises the negative electrode for a non-aqueous electrolyte solution secondary battery according to the foregoing [12].

A non-aqueous electrolyte solution secondary battery that includes the negative electrode for a non-aqueous electrolyte solution secondary battery set forth above in this manner can display excellent electrolyte solution injectability, low-temperature characteristics, and cycle characteristics.

### (Advantageous Effect)

According to the present disclosure, it is possible to provide a conductive material paste for a non-aqueous electrolyte solution secondary battery that is capable of providing a non-aqueous electrolyte solution secondary battery having excellent electrolyte solution injectability, low-temperature characteristics, and cycle characteristics.

Moreover, according to the present disclosure, it is possible to provide a slurry composition for a non-aqueous electrolyte solution secondary battery negative electrode that is capable of providing a non-aqueous electrolyte solution secondary battery having excellent electrolyte solution injectability, low-temperature characteristics, and cycle characteristics.

Furthermore, according to the present disclosure, it is possible to provide a negative electrode for a non-aqueous electrolyte solution secondary battery that is capable of providing a non-aqueous electrolyte solution secondary battery having excellent electrolyte solution injectability, low-temperature characteristics, and cycle characteristics.

Also, according to the present disclosure, it is possible to provide a non-aqueous electrolyte solution secondary battery that has excellent electrolyte solution injectability, low-temperature characteristics, and cycle characteristics.

### DETAILED DESCRIPTION

The following provides a detailed description of embodiments of the present disclosure.

The presently disclosed conductive material paste for a non-aqueous electrolyte solution secondary battery (hereinafter, also referred to simply as a "conductive material paste") may be used as a material in production of a slurry composition for a non-aqueous electrolyte solution secondary battery negative electrode (hereinafter, also referred to simply as a "slurry composition"). Moreover, the presently disclosed negative electrode for a non-aqueous electrolyte solution secondary battery (hereinafter, also referred to simply as a "negative electrode") includes a negative electrode mixed material layer that is formed using the presently disclosed slurry composition for a non-aqueous electrolyte solution secondary battery negative electrode. Furthermore, the presently disclosed non-aqueous electrolyte solution secondary battery includes the presently disclosed negative electrode for a non-aqueous electrolyte solution secondary battery.

### (Conductive material paste for non-aqueous electrolyte solution secondary battery)

The presently disclosed conductive material paste for a non-aqueous electrolyte solution secondary battery (hereinafter, also referred to simply as a "conductive material paste") is a composition having carbon nanotubes and acidic group-containing cellulose nanofibers (hereinafter, also abbreviated as "acidic group-containing CNFs") dispersed and/or dissolved in water serving as a dispersion medium. By using such a conductive material paste, it is possible to produce a non-aqueous electrolyte solution secondary battery having excellent electrolyte solution inj ectability, low-temperature characteristics, and cycle characteristics.

Note that the presently disclosed conductive material paste preferably further contains a dispersant. Moreover, the presently disclosed conductive material paste may further contain components other than the carbon nanotubes, acidic group-containing cellulose nanofibers, dispersant, and water (hereinafter, also referred to as "other components").

The term "conductive material paste" as used in the present specification generally refers to a paste that does not contain an electrode active material such as a negative electrode active material.

### <Carbon nanotubes>

The carbon nanotubes are a material that can function as a conductive material. The carbon nanotubes can improve cycle characteristics of a secondary battery by forming electrical conduction paths in an electrode mixed material layer. The use of carbon nanotubes also enables improvement of low-temperature characteristics of a secondary battery.

The carbon nanotubes are not specifically limited so long as they are carbon nanotubes (CNTs) with which the desired effects according to the present disclosure can be achieved. Carbon nanotubes may, depending on the type of wall format, be single-walled (SW) carbon nanotubes and/or multi-walled (MW) carbon nanotubes. The carbon nanotubes that are contained in the presently disclosed conductive material paste may be single-walled carbon nanotubes, multi-walled carbon nanotubes, or a combination thereof.

The average number of walls of the CNTs is preferably 5 or less, more preferably 4 or less, even more preferably 2.5 or less, further preferably 2 or less, and even further preferably 1.5 or less. When the average number of walls of the CNTs is not more than any of the upper limits set forth above, cycle characteristics of a secondary battery can be further improved.

Note that although no specific limitations are placed on the lower limit for the average number of walls of the CNTs, the average number of walls is normally 1 or more.

Moreover, the average number of walls of the CNTs may be 1.2 or more, or may be 1.2 or less.

The average diameter of the CNTs is preferably 0.5 nm or more, more preferably 1 nm or more, even more preferably 1.5 nm or more, further preferably 2 nm or more, and even further preferably 2.5 nm or more, and is preferably 20 nm or less, more preferably 12 nm or less, even more preferably 8 nm or less, further preferably 6 nm or less, and even further preferably 4 nm or less. When the average diameter of the CNTs is not less than any of the lower limits set forth above, aggregation of the CNTs can be sufficiently inhibited, and sufficient dispersibility of the CNTs as a conductive material can be ensured. On the other hand, when the average diameter of the CNTs is not more than any of the upper limits set forth above, good electrical conduction path formation in an electrode mixed material layer can be achieved, and cycle characteristics of a secondary battery can be further improved.

Moreover, the average diameter of the CNTs may be 3.7 nm or more, or may be 3.7 nm or less.

A ratio of G band peak intensity relative to D band peak intensity (G/D ratio) in a Raman spectrum of the CNTs is preferably 0.6 or more, more preferably 1.2 or more, even more preferably 2.1 or more, further preferably 3.0 or more, and even further preferably 3.6 or more. When the G/D ratio of the CNTs is not less than any of the lower limits set forth above, cycle characteristics of a secondary battery can be further improved. The upper limit for the G/D ratio of the CNTs may be 200 or less, for example, but is not specifically limited thereto.

Moreover, the G/D ratio of the CNTs may be 4.6 or more, or may be 4.6 or less.

### <<Production method of carbon nanotubes>>

CNTs having the properties described above can be produced by a known method such as an arc discharge method, a laser ablation method, or a super growth method without any specific limitations.

### «Proportional content of carbon nanotubes»

The proportional content of the CNTs relative to all solid content of the conductive material paste is preferably 15 mass% or more, more preferably 20 mass% or more, and even more preferably 25 mass% or more, and is preferably 60 mass% or less, more preferably 50 mass% or less, even more preferably 45 mass% or less, further preferably 40 mass% or less, and even further preferably 35 mass% or less. When the proportional content of the CNTs is not less than any of the lower limits set forth above, cycle characteristics of a secondary battery can be further improved because the content of the CNTs in a formed electrode mixed material layer further increases, and even better electrical conduction paths can be formed. Moreover, when the proportional content of the CNTs is not less than any of the lower limits set forth above, low-temperature characteristics of a secondary battery can be further improved. On the other hand, when the proportional content of the CNTs is not more than any of the upper limits set forth above, the affinity of a formed electrode mixed material layer with electrolyte solution (hereinafter, also referred to as "electrolyte solution affinity") further increases, and electrolyte solution injectability and low-temperature characteristics of a secondary battery can be further improved because the proportional content of the acidic group-containing CNFs can be increased. Moreover, when the proportional content of the CNTs is not more than any of the upper limits set forth above, the strength of a formed electrode mixed material layer can be further increased because the proportional content of the acidic group-containing CNFs can be increased, which makes it possible to further inhibit cutting of electrical conduction paths of the CNTs due to expansion and contraction of an active material, and thus enables further improvement of cycle characteristics of a secondary battery.

Furthermore, the proportional content of the CNTs relative to all solid content of the conductive material paste may be 33 mass% or more, or may be 33 mass% or less.

### <Acidic group-containing cellulose nanofibers>

The acidic group-containing cellulose nanofibers are a material that can increase the affinity of an electrode mixed material layer with electrolyte solution and that can improve electrolyte solution injectability and low-temperature characteristics of a secondary battery.

Moreover, the acidic group-containing cellulose nanofibers increase the strength of an electrode mixed material layer, inhibit cutting of electrical conduction paths of CNTs due to expansion and contraction of an active material, and can thereby improve cycle characteristics of a secondary battery.

Furthermore, dispersion stability of the conductive material paste and viscosity stability of a slurry composition can also be improved by using the acidic group-containing cellulose nanofibers.

The acidic group-containing cellulose nanofibers are cellulose nanofibers that include an acidic group. In other words, the acidic group-containing cellulose nanofibers are a material having a structure in which at least a portion of hydroxyl groups (-OH) of cellulose forming the cellulose nanofibers have each been replaced with an acidic group or a functional group including an acidic group.

The acidic group may be a carboxyl group (-COOH), a sulfo group (-SO₃H; also referred to as a "sulfonate group"), a phosphate group (-PO₄H₂), or the like, for example. Note that the above-described acidic group may be in the form of a salt. For example, the acidic group may be in the form of an ammonium salt or an alkali metal salt such as a sodium salt or a potassium salt.

The functional group including an acidic group is not specifically limited so long as it is a functional group that includes the above-described acidic group and may, for example, be a carboxymethyl group (-CH₂COOH), which is a functional group that includes a carboxyl group.

From a viewpoint of further improving dispersion stability of the conductive material paste, viscosity stability of a slurry composition, and electrolyte solution injectability, low-temperature characteristics, and cycle characteristics of a secondary battery, it is preferable that the acidic group-containing cellulose nanofibers include either or both of a carboxyl group and a sulfo group.

The average diameter of the acidic group-containing CNFs is not specifically limited but is preferably 1.5 nm or more, more preferably 2.0 nm or more, and even more preferably 2.5 nm or more, and is preferably 8.0 nm or less, more preferably 6.0 nm or less, and even more preferably 4.0 nm or less. When the average diameter of the acidic group-containing CNFs is not less than any of the lower limits set forth above, the strength of a formed electrode mixed material layer can be further increased, which makes it possible to further inhibit cutting of electrical conduction paths of the CNTs due to expansion and contraction of an active material, and thus enables further improvement of cycle characteristics of a secondary battery. On the other hand, when the average diameter of the acidic group-containing CNFs is not more than any of the upper limits set forth above, dispersion stability of the conductive material paste and viscosity stability of a slurry composition can be improved.

Moreover, the average diameter of the acidic group-containing CNFs may be 3.4 nm or more, or may be 3.4 nm or less.

A structure in which the acidic group-containing CNFs are adsorbed to surfaces of the CNTs is preferably included in the conductive material paste. The inclusion of a structure in which the acidic group-containing CNFs are adsorbed to surfaces of the CNTs in the conductive material paste enables further improvement of dispersion stability of the conductive material paste, viscosity stability of a slurry composition, and electrolyte solution injectability, cycle characteristics, and low-temperature characteristics of a secondary battery.

Note that it is possible to confirm whether or not acidic group-containing CNFs are adsorbed to surfaces of CNTs through observation using a scanning electron microscope (SEM) or a transmission electron microscope (TEM).

### <<Production method of acidic group-containing cellulose nanofibers>>

No specific limitations are placed on the method by which the acidic group-containing cellulose nanofibers are produced. For example, the acidic group-containing cellulose nanofibers can be produced by performing treatment such as micronization, acidic group introduction through anionic modification, and so forth with respect to cellulose serving as a raw material by a known method.

No specific limitations are placed on cellulose that can be used as a raw material. For example, purified cellulose isolated from a cellulose biosynthesis system such as a plant, animal, or bacterially produced gel can be used. Specifically, coniferous wood pulp, deciduous wood pulp, cotton-based pulp such as cotton linter or cotton lint, non-wood-based pulp such as barley straw pulp or bagasse pulp, bacterial cellulose, cellulose isolated from sea squirt, cellulose isolated from sea grass, or the like may be used as the cellulose.

### «Mass ratio of acidic group-containing CNFs relative to CNTs (acidic group-containing CNFs/CNTs)»

The mass ratio of the acidic group-containing CNFs relative to the CNTs (acidic group-containing CNFs/CNTs) in the conductive material paste is required to be 0.3 or more, and is preferably 0.4 or more, more preferably 0.5 or more, even more preferably 0.6 or more, further preferably 0.7 or more, and even more preferably 0.8 or more. Moreover, the mass ratio of the acidic group-containing CNFs relative to the CNTs (acidic group-containing CNFs/CNTs) in the conductive material paste is required to be 4 or less, and is preferably 3.5 or less, more preferably 3 or less, even more preferably 2.5 or less, further preferably 2 or less, and even further preferably 1.5 or less. Through the mass ratio of the acidic group-containing CNFs relative to the CNTs (acidic group-containing CNFs/CNTs) being 0.4 or more, electrolyte solution affinity of a formed electrode mixed material layer is sufficiently increased, and electrolyte solution injectability and low-temperature characteristics of a secondary battery can be sufficiently improved. Moreover, when the mass ratio of the acidic group-containing CNFs relative to the CNTs (acidic group-containing CNFs/CNTs) is not less than any of the lower limits set forth above, the strength of a formed electrode mixed material layer can be further increased, which makes it possible to further inhibit cutting of electrical conduction paths of the CNTs due to expansion and contraction of an active material, and thus enables further improvement of cycle characteristics of a secondary battery. On the other hand, through the mass ratio of the acidic group-containing CNFs relative to the CNTs (acidic group-containing CNFs/CNTs) being 4 or less, cycle characteristics of a secondary battery can be sufficiently improved because the formation of good electrical conduction paths is possible through the inclusion of a sufficient amount of the CNTs in a formed electrode mixed material layer. Moreover, when the mass ratio of the acidic group-containing CNFs relative to the CNTs (acidic group-containing CNFs/CNTs) is not more than any of the upper limits set forth above, low-temperature characteristics of a secondary battery can be further improved.

Furthermore, the mass ratio of the acidic group-containing CNFs relative to the CNTs (acidic group-containing CNFs/CNTs) in the conductive material paste may be 1 or more, or may be 1 or less.

### <<Proportional content of acidic group-containing cellulose nanofibers>>

The proportional content of the acidic group-containing CNFs relative to all solid content of the conductive material paste is preferably 15 mass% or more, more preferably 20 mass% or more, and even more preferably 25 mass% or more, and is preferably 60 mass% or less, more preferably 50 mass% or less, even more preferably 45 mass% or less, and further preferably 35 mass% or less. When the proportional content of the acidic group-containing CNFs is not less than any of the lower limits set forth above, electrolyte solution affinity of a formed electrode mixed material layer further increases, and electrolyte solution injectability and low-temperature characteristics of a secondary battery can be further improved. Moreover, when the proportional content of the acidic group-containing CNFs is not less than any of the lower limits set forth above, the strength of a formed electrode mixed material layer can be further increased, which makes it possible to further inhibit cutting of electrical conduction paths of the CNTs due to expansion and contraction of an active material, and thus enables further improvement of cycle characteristics of a secondary battery. On the other hand, when the proportional content of the acidic group-containing CNFs is not more than any of the upper limits set forth above, cycle characteristics of a secondary battery can be further improved because it is possible to increase the proportional content of the CNTs in a formed electrode mixed material layer and thereby enable formation of even better electrical conduction paths. Moreover, when the proportional content of the acidic group-containing CNFs is not more than any of the upper limits set forth above, low-temperature characteristics of a secondary battery can be further improved because the proportional content of the CNTs in a formed electrode mixed material layer can be increased.

Furthermore, the proportional content of the acidic group-containing CNFs relative to all solid content of the conductive material paste may be 33 mass% or more, or may be 33 mass% or less.

### <Dispersant>

The presently disclosed conductive material paste preferably further contains a dispersant in addition to the CNTs and the acidic group-containing CNFs described above.

A dispersant that can suitably be contained in the presently disclosed conductive material paste includes either or both of a carboxyl group and a sulfo group. Note that the carboxyl group and/or sulfo group of the dispersant may be in the form of a salt. For example, the carboxyl group and/or sulfo group may be in the form of an ammonium salt or an alkali metal salt such as a sodium salt.

By using a dispersant that includes either or both of a carboxyl group and a sulfo group, it is possible to inhibit aggregation of the CNTs in the conductive material paste and improve dispersion stability of the conductive material paste and viscosity stability of a slurry composition, and it is also possible to increase dispersibility of the CNTs and form even better electrical conduction paths in a formed electrode mixed material layer, thereby enabling further improvement of cycle characteristics of a secondary battery. Moreover, by using a dispersant that includes a specific functional group such as described above, it is possible to further improve low-temperature characteristics of a secondary battery.

Examples of dispersants that include a carboxyl group include carboxymethyl cellulose and salts of carboxymethyl cellulose; and polymers obtained through polymerization of a carboxyl group-containing monomer such as acrylic acid or methacrylic acid and salts of these polymers.

Examples of dispersants that include a sulfo group include polymers obtained through polymerization of a sulfo group-containing monomer such as styrene sulfonic acid, vinyl sulfonic acid, methyl vinyl sulfonic acid, or (meth)allyl sulfonic acid and salts of these polymers.

Examples of dispersants that include both a carboxyl group and a sulfo group include copolymers of a carboxyl group-containing monomer and a sulfo group-containing monomer such as described above and salts of these copolymers.

Of these examples, carboxymethyl cellulose, salts of carboxymethyl cellulose, polymers obtained through polymerization of a sulfo group-containing monomer, and salts of these polymers are preferable as the dispersant from a viewpoint of even further improving low-temperature characteristics and cycle characteristics of a secondary battery, with carboxymethyl cellulose, salts of carboxymethyl cellulose, homopolymers of styrene sulfonic acid (i.e., poly(styrene sulfonic acid)), and salts of these homopolymers being preferable, salts of carboxymethyl cellulose and salts of poly(styrene sulfonic acid) being more preferable, alkali metal salts of carboxymethyl cellulose and alkali metal salts of poly(styrene sulfonic acid) being even more preferable, and sodium carboxymethyl cellulose and poly(sodium styrenesulfonate) being particularly preferable.

The dispersant that can suitably be contained in the conductive material paste is normally water-soluble, though no specific limitations are made. When a dispersant is referred to as "water-soluble", this means that when 0.5 g of the dispersant is dissolved in 100 g of water at 25°C, insoluble content is not less than 0 mass% and less than 1.0 mass%.

It should be noted that the dispersant that can suitably be contained in the conductive material paste is a different component to the previously described acidic group-containing cellulose nanofibers.

For example, carboxymethyl cellulose and/or a salt thereof that can be used as a dispersant is water-soluble and thus does not have a fibrous structure in water, whereas the acidic group-containing CNFs are insoluble in water and have a fibrous structure in water.

### «Proportional content of dispersant»

The proportional content of the dispersant relative to all solid content of the conductive material paste is preferably 15 mass% or more, more preferably 20 mass% or more, and even more preferably 25 mass% or more, and is preferably 60 mass% or less, more preferably 45 mass% or less, even more preferably 40 mass% or less, and further preferably 35 mass% or less. When the proportional content of the dispersant is not less than any of the lower limits set forth above, it is possible to further inhibit aggregation of the CNTs in the conductive material paste and further improve dispersion stability of the conductive material paste and viscosity stability of a slurry composition, and it is also possible to further increase dispersibility of the CNTs and form even better electrical conduction paths in a formed electrode mixed material layer, thereby enabling even further improvement of cycle characteristics of a secondary battery. Moreover, when the proportional content of the dispersant is not less than any of the lower limits set forth above, low-temperature characteristics of a secondary battery can be even further improved. On the other hand, when the proportional content of the dispersant is not more than any of the upper limits set forth above, sufficiently high electrolyte solution injectability and cycle characteristics of a secondary battery can be ensured.

Furthermore, the proportional content of the dispersant relative to all solid content of the conductive material paste may be 33 mass% or more, or may be 33 mass% or less.

### <Other components>

Examples of other components that can be contained in the conductive material paste include, but are not specifically limited to, dispersion mediums other than water, carbon black as a conductive material other than the carbon nanotubes, graphene, binders, and components subsequently described in the "Slurry composition for non-aqueous electrolyte solution secondary battery negative electrode" section with the exception of an electrode active material (for example, components among thickeners that differ from the above-described dispersant). Note that one of these other components can be used individually, or two or more of these other components can be used in combination.

### <Dispersion medium other than water>

An organic solvent may be used as a dispersion medium other than water. Examples of organic solvents that may be used include, but are not specifically limited to, alcohols such as methanol, ethanol, n-propanol, isopropanol, n-butanol, isobutanol, t-butanol, pentanol, hexanol, heptanol, octanol, nonanol, decanol, and amyl alcohol; ketones such as acetone, methyl ethyl ketone, and cyclohexanone; esters such as ethyl acetate and butyl acetate; ethers such as diethyl ether, dioxane, and tetrahydrofuran; amide organic solvents such as N,N-dimethylformamide and N-methyl-2-pyrrolidone (NMP); and aromatic hydrocarbons such as toluene, xylene, chlorobenzene, orthodichlorobenzene, and paradichlorobenzene. Note that one organic solvent can be used individually, or two or more organic solvents can be used in combination.

### <<Carbon black>>

The presently disclosed conductive material paste may further contain carbon black. The carbon black that is used herein is an assembly in which a number of layers of graphitic carbon microcrystals assemble to form a turbostratic structure and specific examples thereof include acetylene black, Ketjenblack, furnace black, channel black, and thermal lamp black. Among carbon blacks, acetylene black, furnace black, and Ketjenblack are particularly preferable in terms that a conductive adhesive layer can be packed densely, resistance to electron movement can be reduced, and internal resistance of an electrochemical device can be reduced.

The carbon black that can be contained in the presently disclosed conductive material paste preferably includes a heteroelement differing from carbon that is a main component thereof. The heteroelement may, more specifically, be silicon, nitrogen, or boron, with boron being particularly preferable in terms that resistance to electron movement can be reduced and internal resistance of an electrochemical device can be reduced.

The content of the heteroelement in the carbon black that can be contained in the presently disclosed conductive material paste is preferably within a range of not less than 0.01 mass% and not more than 20 mass%, more preferably within a range of not less than 0.05 mass% and not more than 10 mass%, and particularly preferably within a range of not less than 0.1 mass% and not more than 5 mass%. When the content of the heteroelement in the carbon black is within any of the specific ranges set forth above, resistance to electron movement is reduced, and internal resistance of an electrochemical device is reduced.

The specific surface area of the carbon black that can be contained in the presently disclosed conductive material paste is, for example, not less than 25 m²/g and not more than 300 m²/g, preferably not less than 30 m²/g and not more than 200 m²/g, and more preferably not less than 40 m²/g and not more than 150 m²/g from a viewpoint of maintaining good electrical conductivity. An excessively large specific surface area of the carbon black results in high viscosity and makes it difficult to produce a slurry composition that is suitable for high-speed coating. Conversely, an excessively small specific surface area of the carbon black results in reduction of electrical conductivity and deterioration of dispersibility of a slurry composition.

The volume-average particle diameter D50 of the carbon black that can be contained in the presently disclosed conductive material paste is preferably not less than 0.01 µm and less than 1.0 µm, more preferably not less than 0.05 µm and less than 0.8 µm, and particularly preferably not less than 0.1 µm and less than 0.5 µm. By using carbon black having a volume-average particle diameter D50 that is within any of the specific ranges set forth above, spherical graphite and the carbon black pack densely in a conductive adhesive layer.

### «Particulate polymer (binder)»

The presently disclosed conductive material paste may further contain a binder.

For example, a particulate polymer can be used as a binder. The particulate polymer may include an unsaturated carboxylic acid monomer unit, an aromatic vinyl monomer unit, and a diene monomer unit, for example, as constitutional units of the polymer. It should be noted that the particulate polymer serving as the binder is a different component to the previously described dispersant including either or both of a carboxyl group and a sulfo group.

Also note that when a polymer such as a particulate polymer is said to "include a monomer unit" in the present specification, this means that "a polymer obtained using that monomer includes a repeating unit derived from the monomer".

Moreover, the proportional contents of monomer units in a polymer such as a particulate polymer referred to in the present specification can be measured by a nuclear magnetic resonance (NMR) method such as ¹H-NMR or ¹³C-NMR.

### {Unsaturated carboxylic acid monomer unit}

The unsaturated carboxylic acid monomer unit may be an ethylenically unsaturated carboxylic acid monomer unit. An ethylenically unsaturated carboxylic acid monomer that can form the ethylenically unsaturated carboxylic acid monomer unit normally does not include a hydroxyl group (-OH) other than a hydroxyl group in a carboxyl group.

Examples of ethylenically unsaturated carboxylic acid monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids and acid anhydrides thereof. One ethylenically unsaturated carboxylic acid monomer may be used individually, or two or more ethylenically unsaturated carboxylic acid monomers may be used in combination in a freely selected ratio.

Examples of ethylenically unsaturated monocarboxylic acids that may be used include acrylic acid, methacrylic acid, and crotonic acid.

Examples of derivatives of ethylenically unsaturated monocarboxylic acids that may be used include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of ethylenically unsaturated dicarboxylic acids that may be used include maleic acid, fumaric acid, and itaconic acid.

Examples of acid anhydrides of ethylenically unsaturated dicarboxylic acids that may be used include maleic anhydride, diacrylic anhydride, methylmaleic anhydride, and dimethylmaleic anhydride.

Examples of derivatives of ethylenically unsaturated dicarboxylic acids that may be used include methylmaleic acid, phenylmaleic acid, chloromaleic acid, dichloromaleic acid, and fluoromaleic acid.

When all monomer units in the particulate polymer serving as the binder are taken to be 100 parts by mass, the content of the unsaturated carboxylic acid monomer unit is preferably 2 parts by mass or more, more preferably 4 parts by mass or more, and even more preferably 8 parts by mass or more, and is preferably 30 parts by mass or less, more preferably 25 parts by mass or less, and even more preferably 20 parts by mass or less. When the proportional content of the unsaturated carboxylic acid monomer unit in the particulate polymer serving as the binder is not less than any of the lower limits set forth above, viscosity stability of a slurry composition produced using the conductive material paste can be improved. On the other hand, when the proportional content of the unsaturated carboxylic acid monomer unit in the particulate polymer serving as the binder is not more than any of the upper limits set forth above, the solid content concentration of a slurry composition produced using the conductive material paste can be increased.

### {Aromatic vinyl monomer unit}

Examples of aromatic vinyl monomers that can form the aromatic vinyl monomer unit include styrene, α-methylstyrene, p-t-butylstyrene, butoxystyrene, vinyltoluene, chlorostyrene, and vinylnaphthalene. One aromatic vinyl monomer may be used individually, or two or more aromatic vinyl monomers may be used in combination in a freely selected ratio. Of these aromatic vinyl monomers, styrene is preferable.

When all monomer units in the particulate polymer serving as the binder are taken to be 100 parts by mass, the content of the aromatic vinyl monomer unit is preferably 20 parts by mass or more, more preferably 25 parts by mass or more, and even more preferably 30 parts by mass or more, and is preferably 90 parts by mass or less, more preferably 80 parts by mass or less, and even more preferably 70 parts by mass or less. When the proportional content of the aromatic vinyl monomer unit in the particulate polymer serving as the binder is not less than any of the lower limits set forth above, viscosity stability of a slurry composition produced using the conductive material paste can be improved. On the other hand, when the proportional content of the aromatic vinyl monomer unit in the particulate polymer serving as the binder is not more than any of the upper limits set forth above, the degree of swelling of the particulate polymer serving as the binder in an electrolyte solution that is used in a secondary battery can be set within a suitable range.

### {Diene monomer unit}

Examples of diene monomers that can form the diene monomer unit include aliphatic conjugated diene monomers. Examples of aliphatic conjugated diene monomers that may be used include 1,3-butadiene, isoprene, 2,3-dimethyl-1,3-butadiene, 1,3-pentadiene, 1,3-hexadiene, chloroprene, and cyanobutadiene. One of the conjugated diene monomers described above may be used individually, or two or more of the conjugated diene monomers described above may be used in combination in a freely selected ratio. Of these conjugated diene monomers, 1,3-butadiene and isoprene are preferable in terms of ease of acquisition, and 1,3-butadiene is more preferable.

When all monomer units in the particulate polymer serving as the binder are taken to be 100 parts by mass, the content of the diene monomer unit is preferably 20 parts by mass or more, more preferably 25 parts by mass or more, and even more preferably 30 parts by mass or more, and is preferably 85 parts by mass or less, more preferably 80 parts by mass or less, and even more preferably 70 parts by mass or less. When the proportional content of the diene monomer unit in the particulate polymer serving as the binder is not less than any of the lower limits set forth above, adhesiveness of a negative electrode formed using a slurry composition that contains the conductive material paste can be increased. On the other hand, when the proportional content of the diene monomer unit in the particulate polymer serving as the binder is not more than any of the upper limits set forth above, sufficiently high viscosity stability of a slurry composition produced using the conductive material paste can be ensured.

### {Other monomer units}

The particulate polymer serving as the binder may further include monomer units other than the unsaturated carboxylic acid monomer unit, aromatic vinyl monomer unit, and diene monomer unit described above (also referred to as "other monomer units").

Examples of other monomers that can form other monomer units include, but are not specifically limited to, cyano group-containing vinyl monomers, amino group-containing vinyl monomers, pyridyl group-containing vinyl monomers, and alkoxyl group-containing vinyl monomers. One monomer that is copolymerizable with a diene monomer such as described above may be used individually, or two or more of such monomers may be used in combination in a freely selected ratio.

### {Production method of particulate polymer}

The particulate polymer serving as the binder can be obtained by polymerizing a monomer composition containing the various monomers described above by a known method.

### <pH of conductive material paste>

The pH of the conductive material paste is preferably 6 or higher, and more preferably 6.5 or higher, and is preferably 9 or lower, and more preferably 8.5 or lower. When the pH of the conductive material paste is not lower than any of the lower limits set forth above, viscosity stability of a slurry composition can be increased. On the other hand, when the pH of the conductive material paste is not higher than any of the upper limits set forth above, adhesiveness of a negative electrode formed using a slurry composition that contains the conductive material paste can be increased.

Moreover, the pH of the conductive material paste may be 8 or higher, or may be 8 or lower.

### <Volume-average particle diameter D50>

The volume-average particle diameter D50 of particles contained in the conductive material paste is preferably 0.5 µm or more, more preferably 1 µm or more, and even more preferably 2 µm or more, and is preferably 20 µm or less, more preferably 16 µm or less, and even more preferably 14 µm or less. When the volume-average particle diameter D50 of particles contained in the conductive material paste is not less than any of the lower limits set forth above, dispersion stability of the conductive material paste can be increased, and a good electrode mixed material layer with little surface roughness after slurry composition application can be obtained. On the other hand, when the volume-average particle diameter D50 of particles contained in the conductive material paste is not more than any of the upper limits set forth above, good electrical conduction path formation in an electrode mixed material layer can be achieved, and cycle characteristics of a secondary battery can be further improved.

Moreover, the volume-average particle diameter D50 of particles contained in the conductive material paste may be 9 µm or more, may be 9 µm or less, may be 12 µm or more, or may be 12 µm or less.

### <Production method of conductive material paste>

The presently disclosed conductive material paste can be produced by mixing the above-described CNTs, acidic group-containing CNFs, and water, and also the dispersant and other components that are used as necessary, in the amounts described above.

Note that mixing of the various components can be performed using a known mixing device without any specific limitations. Examples of such mixing devices include a disper blade, a Homo Mixer, a planetary mixer, a kneader, a ball mill, a bead mill, and a homogenizer.

### (Slurry composition for non-aqueous electrolyte solution secondary battery negative electrode)

The presently disclosed slurry composition for a non-aqueous electrolyte solution secondary battery negative electrode contains the conductive material paste set forth above and a silicon-based active material or the like, and may, as necessary, contain a negative electrode active material other than the silicon-based active material (hereinafter, also referred to as the "other negative electrode active material"), a thickener, a binder, carbon black, and other additives.

By using a slurry composition that contains the conductive material paste set forth above in this manner, it is possible to produce a non-aqueous electrolyte solution secondary battery having excellent electrolyte solution injectability, low-temperature characteristics, and cycle characteristics.

### <Conductive material paste>

The presently disclosed conductive material paste set forth above can be used as the conductive material paste.

Although no specific limitations are placed on the additive amount of the conductive material paste in production of the slurry composition, the additive amount of the conductive material paste is preferably adjusted such that the content of the CNTs and the content of the acidic group-containing CNFs in the produced slurry composition are within specific ranges that are described below.

### <<Content of CNTs>>

The content of the CNTs in the slurry composition relative to 100 parts by mass of the content of negative electrode active material (total content of silicon-based active material and other negative electrode active material) may be 0.01 parts by mass or more, preferably 0.05 parts by mass or more, and more preferably 0.1 parts by mass or more, for example, and may be 3 parts by mass or less, preferably 1 part by mass or less, and more preferably 0.6 parts by mass or less, for example. When the content of the CNTs in the slurry composition is not less than any of the lower limits set forth above, cycle characteristics of a secondary battery can be further improved. On the other hand, when the content of the CNTs in the slurry composition is not more than any of the upper limits set forth above, sufficiently high capacity of a secondary battery can be ensured.

Moreover, the content of the CNTs in the slurry composition relative to 100 parts by mass of the silicon-based active material may be 0.1 parts by mass or more, preferably 0.5 parts by mass or more, and more preferably 1 part by mass or more, for example, and may be 50 parts by mass or less, preferably 20 parts by mass or less, and more preferably 10 parts by mass or less, for example. When the content of the CNTs in the slurry composition is not less than any of the lower limits set forth above, cycle characteristics of a secondary battery can be further improved. On the other hand, when the content of the CNTs in the slurry composition is not more than any of the upper limits set forth above, sufficiently high capacity of a secondary battery can be ensured.

### <<Content of acidic group-containing CNFs>>

The content of the acidic group-containing CNFs in the slurry composition relative to 100 parts by mass of the content of negative electrode active material (total content of silicon-based active material and other negative electrode active material) may be 0.01 parts by mass or more, preferably 0.05 parts by mass or more, and more preferably 0.1 parts by mass or more, for example, and may be 5 parts by mass or less, preferably 2 parts by mass or less, and more preferably 1 part by mass or less, for example. When the content of the acidic group-containing CNFs in the slurry composition is not less than any of the lower limits set forth above, electrolyte solution injectability, low-temperature characteristics, and cycle characteristics of a secondary battery can be further improved. On the other hand, when the content of the acidic group-containing CNFs in the slurry composition is not more than any of the upper limits set forth above, sufficiently high capacity of a secondary battery can be ensured.

Moreover, the content of the acidic group-containing CNFs in the slurry composition relative to 100 parts by mass of the silicon-based active material may be 0.1 parts by mass or more, preferably 0.5 parts by mass or more, and more preferably 1 part by mass or more, for example, and may be 50 parts by mass or less, preferably 20 parts by mass or less, and more preferably 10 parts by mass or less, for example. When the content of the acidic group-containing CNFs in the slurry composition is not less than any of the lower limits set forth above, electrolyte solution injectability, low-temperature characteristics, and cycle characteristics of a secondary battery can be further improved. On the other hand, when the content of the acidic group-containing CNFs in the slurry composition is not more than any of the upper limits set forth above, sufficiently high capacity of a secondary battery can be ensured.

### <Silicon-based active material>

The silicon-based active material may be silicon (Si), a silicon-containing alloy, SiO, SiOₓ, a composite of a Si-containing material and conductive carbon obtained by coating or combining the Si-containing material with the conductive carbon, or the like, for example.

Note that the particle diameter of the silicon-based active material can be the same as that of a conventionally used electrode active material without any specific limitations.

Moreover, one silicon-based active material can be used individually, or two or more silicon-based active materials can be used in combination.

The amount of the silicon-based active material in the slurry composition can be set within a conventionally used range without any specific limitations.

The proportional content of the silicon-based active material in the slurry composition relative to all solid content of the slurry composition may be 3 mass% or more, preferably 5 mass% or more, and more preferably 8 mass% or more, for example, and may be 40 mass% or less, preferably 35 mass% or less, and more preferably 30 mass% or less, for example. When the proportional content of the silicon-based active material is not less than any of the lower limits set forth above, the capacity of a secondary battery can be increased. On the other hand, when the proportional content of the silicon-based active material is not more than any of the upper limits set forth above, sufficiently high cycle characteristics of a secondary battery can be ensured.

### <Other negative electrode active material>

Examples of other negative electrode active materials that may be used include carbon-based negative electrode active materials, metal-based negative electrode active materials, and negative electrode active materials that are combinations thereof without any specific limitations.

The term "carbon-based negative electrode active material" refers to an active material having carbon as a main framework that allows insertion (also referred to as "doping") of lithium. The carbon-based negative electrode active material may be a carbonaceous material or a graphitic material, for example.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

The term "metal-based negative electrode active material" refers to an active material that contains metal, the structure of which usually contains an element that allows insertion of lithium, and that has a theoretical electric capacity per unit mass of 500 mAh/g or more when lithium is inserted. Examples of metal-based active materials that may be used include lithium metal, simple substances of metals that can form a lithium alloy (for example, Ag, Al, Ba, Bi, Cu, Ga, Ge, In, Ni, P, Pb, Sb, Sn, Sr, Zn, and Ti) and alloys thereof, and oxides, sulfides, nitrides, carbides, and phosphides of any of the preceding examples.

Note that the particle diameter of the other negative electrode active material can be the same as that of a conventionally used electrode active material without any specific limitations.

Moreover, one other negative electrode active material can be used individually, or two or more other negative electrode active materials can be used in combination.

The amount of the other negative electrode active material in the slurry composition can be set within a conventionally used range without any specific limitations.

A mass ratio of the silicon-based active material and the other negative electrode active material (silicon-based active material/other negative electrode active material) in the slurry composition is preferably 1/99 or more, more preferably 1/49 or more, and even more preferably 1/19 or more, and is preferably 1/1 or less, more preferably 2/3 or less, and even more preferably 1/4 or less. When the mass ratio of the silicon-based active material and the other negative electrode active material (silicon-based active material/other negative electrode active material) in the slurry composition is not less than any of the lower limits set forth above, the capacity of a secondary battery can be increased. On the other hand, when the mass ratio of the silicon-based active material and the other negative electrode active material (silicon-based active material/other negative electrode active material) in the slurry composition is not more than any of the upper limits set forth above, sufficiently high cycle characteristics of a secondary battery can be ensured.

Moreover, the mass ratio of the silicon-based active material and the other negative electrode active material (silicon-based active material/other negative electrode active material) in the slurry composition may be 1/9 or more, or may be 1/9 or less.

The proportional content of negative electrode active material (i.e., the total proportional content of the silicon-based active material and the other negative electrode active material) in the slurry composition relative to all solid content of the slurry composition may be 90 mass% or more, preferably 92 mass% or more, and more preferably 95 mass% or more, for example, and may be 99 mass% or less, for example. When the proportional content of negative electrode active material is not less than any of the lower limits set forth above, the capacity of a secondary battery can be increased. Moreover, when the proportional content of negative electrode active material is not more than the upper limit set forth above, cycle characteristics of a secondary battery can be further improved.

### <Thickener>

The thickener is not specifically limited and may be carboxymethyl cellulose, methyl cellulose, hydroxypropyl methyl cellulose, hydroxyethyl methyl cellulose, polyvinyl alcohol, polymethacrylic acid, polyacrylic acid, or an acrylamide/acrylic acid/N-hydroxyethylacrylamide terpolymer, for example. One of these thickeners can be used individually, or two or more of these thickeners can be used in combination. Moreover, these thickeners can be used in an unneutralized state or a neutralized state.

The content of the thickener in the presently disclosed slurry composition relative to 100 parts by mass of the content of negative electrode active material (total content of silicon-based active material and other negative electrode active material) is preferably 0.2 parts by mass or more, and more preferably 0.4 parts by mass or more, and is preferably 5.0 parts by mass or less, and more preferably 4.0 parts by mass or less. When the content of the thickener per 100 parts by mass of negative electrode active material is not less than any of the lower limits set forth above, cycle characteristics of a secondary battery can be further improved. On the other hand, when the content of the thickener per 100 parts by mass of negative electrode active material is not more than any of the upper limits set forth above, the capacity of a secondary battery can be improved.

Moreover, the content of the thickener in the presently disclosed slurry composition relative to 100 parts by mass of the content of negative electrode active material (total content of silicon-based active material and other negative electrode active material) may be 2 parts by mass or more, or may be 2 parts by mass or less.

### <Binder>

The binder may be the particulate polymer that was previously described in the "Conductive material paste" section, for example. The content of the binder in the presently disclosed slurry composition relative to 100 parts by mass of the content of negative electrode active material (total content of silicon-based active material and other negative electrode active material) can be set as 0.1 parts by mass or more, and can be set as 3.0 parts by mass or less, for example.

Moreover, the content of the binder in the presently disclosed slurry composition relative to 100 parts by mass of the content of negative electrode active material (total content of silicon-based active material and other negative electrode active material) may be 1 part by mass or more, or may be 1 part by mass or less.

### <Carbon black>

The carbon black may be the carbon black that was previously described in the "Conductive material paste" section, for example. The content of the carbon black in the presently disclosed slurry composition can be adjusted as appropriate within a range that yields the desired effects according to the present disclosure without any specific limitations.

### <Other additives>

Examples of other additives that can be contained in the slurry composition include reinforcing materials, antioxidants, and additives for electrolyte solution having a function of inhibiting electrolyte solution decomposition. One of these optional components can be used individually, or two or more of these optional components can be used in combination.

### <Production method of slurry composition>

No specific limitations are placed on the mixing method when the slurry composition is obtained through mixing of the above-described components. For example, a known mixing device can be used.

### (Negative electrode for non-aqueous electrolyte solution secondary battery)

The presently disclosed negative electrode for a non-aqueous electrolyte solution secondary battery includes a negative electrode mixed material layer that is formed using the presently disclosed slurry composition set forth above. More specifically, the presently disclosed negative electrode normally has a structure in which a negative electrode mixed material layer formed of a dried product of the presently disclosed slurry composition is included on a current collector. Accordingly, the negative electrode mixed material layer contains carbon nanotubes, acidic group-containing cellulose nanofibers, and a silicon-based active material, and may contain another negative electrode active material, a dispersant, a thickener, a binder, carbon black, and other additives as necessary. Note that the preferred ratio of the components in the electrode mixed material layer is the same as the preferred ratio of the components in the slurry composition.

The presently disclosed negative electrode can cause a non-aqueous electrolyte solution secondary battery to display excellent electrolyte solution injectability, low-temperature characteristics, and cycle characteristics as a result including a negative electrode mixed material layer that has been formed using the presently disclosed slurry composition set forth above.

### <Current collector>

The current collector for the negative electrode is formed of a material having electrical conductivity and electrochemical durability. The current collector may, for example, be a current collector that is formed of iron, copper, aluminum, nickel, stainless steel, titanium, tantalum, gold, platinum, or the like. One of these materials can be used individually, or two or more of these materials can be used in combination. The current collector for the negative electrode is preferably a current collector formed of copper (copper foil, etc.).

### <Production method of negative electrode>

No specific limitations are placed on the method by which the presently disclosed negative electrode is produced. For example, the presently disclosed negative electrode can be produced by applying the presently disclosed slurry composition set forth above onto at least one side of the current collector and then drying the slurry composition to form a negative electrode mixed material layer. In more detail, this production method includes a step of applying the slurry composition onto at least one side of the current collector (application step) and a step of drying the slurry composition that has been applied onto at least one side of the current collector to form a negative electrode mixed material layer on the current collector (drying step).

### «Application step»

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the negative electrode mixed material layer to be obtained after drying.

### <<Drying step>>

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, a negative electrode mixed material layer can be formed on the current collector to thereby obtain a negative electrode that includes the current collector and the negative electrode mixed material layer.

After the drying step, the negative electrode mixed material layer may be further subjected to a pressing process such as mold pressing or roll pressing. This pressing process can improve peel strength of the negative electrode.

### (Non-aqueous electrolyte solution secondary battery)

The presently disclosed non-aqueous electrolyte solution secondary battery includes the presently disclosed negative electrode set forth above. Moreover, the presently disclosed non-aqueous electrolyte solution secondary battery has excellent electrolyte solution injectability, low-temperature characteristics, and cycle characteristics as a result of including the presently disclosed negative electrode. Note that the presently disclosed non-aqueous electrolyte solution secondary battery may be a lithium ion secondary battery, a sodium ion secondary battery, or the like, for example.

The following describes the configuration of a lithium ion secondary battery as one example of the presently disclosed non-aqueous electrolyte solution secondary battery. This lithium ion secondary battery includes the presently disclosed negative electrode, a positive electrode, an electrolyte solution, and a separator.

### <Positive electrode>

Any known positive electrode for a non-aqueous electrolyte solution secondary battery (for example, a lithium ion secondary battery) can be used without any specific limitations as the positive electrode.

### <Electrolyte solution>

The electrolyte solution is normally an organic electrolyte solution obtained by dissolving a supporting electrolyte in an organic solvent. The supporting electrolyte may, for example, be a lithium salt. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and may be preferably 0.5 mass% to 15 mass%, more preferably 2 mass% to 13 mass%, and even more preferably 5 mass% to 10 mass%, for example. Known additives such as fluoroethylene carbonate (FEC), vinylene carbonate (VC), and ethyl methyl sulfone may be added to the electrolyte solution.

### <Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred since such a membrane can reduce the total thickness of the separator, which increases the ratio of electrode active material in the lithium ion secondary battery, and consequently increases the volumetric capacity.

### <Production method of non-aqueous electrolyte solution secondary battery>

The non-aqueous electrolyte solution secondary battery in accordance with the present disclosure can be produced by, for example, stacking the presently disclosed negative electrode and the positive electrode with the separator in-between, performing rolling, folding, or the like of the resultant laminate, as necessary, in accordance with the battery shape, placing the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the non-aqueous electrolyte solution secondary battery may be a coin type, a button type, a sheet type, a cylinder type, a prismatic type, a flat type, or the like, for example.

### EXAMPLES

The following provides a more specific description of the present disclosure based on examples. However, the present disclosure is not limited to the following examples. In the following description, "%" and "parts" used in expressing quantities are by mass, unless otherwise specified.

In the examples and comparative examples, the following methods were used to evaluate the volume-average particle diameter D50 of particles contained in a conductive material paste, the dispersion stability of a conductive material paste, the viscosity stability of a slurry composition, and the electrolyte solution injectability, low-temperature characteristics, and cycle characteristics of a lithium ion secondary battery.

### <Volume-average particle diameter D50>

Wet measurement of the volume-average particle diameter D50 was performed in accordance with JIS Z8825:2013 with respect to a produced conductive material paste using a laser diffraction/scattering particle size analyzer (Microtrac MT-3300EXII produced by MicrotracBEL Corp.). In this measurement, deionized water was used as a diluting solvent to perform adjustment to obtain a specific scattered light intensity.

### <Dispersion stability>

The viscosity η1 of a conductive material paste straight after production was measured at a point 60 seconds after the start of spindle rotation using a B-type viscometer under conditions of a temperature of 25°C and a spindle rotation speed of 60 rpm. The conductive material paste for which η1 had been measured was then stored under conditions of 10 days at rest at 25°C, and the viscosity η2 after storage was measured in the same way as the viscosity η1. A ratio of η2 relative to η1 (η2/η1) was taken as a paste viscosity ratio and was evaluated by the following standard. A value of closer to 1.0 for the paste viscosity ratio indicates that thickening of the conductive material paste is suppressed and that the conductive material paste has better dispersion stability.
A: Paste viscosity ratio of less than 1.15
B: Paste viscosity ratio of not less than 1.15 and less than 1.6
C: Paste viscosity ratio of not less than 1.6 and less than 2.0
D: Paste viscosity ratio of 2.0 or more

### <Viscosity stability>

The viscosity η3 of a slurry composition straight after production was measured at a point 60 seconds after the start of spindle rotation using a B-type viscometer under conditions of a temperature of 25°C and a spindle rotation speed of 60 rpm. The slurry composition for which η3 had been measured was then stored under conditions of 3 days at rest at 25°C, and the viscosity η4 after storage was measured in the same way as the viscosity η3. A ratio of η4 relative to η3 (η4/η3) was taken as a slurry viscosity ratio and was evaluated by the following standard. A value of closer to 1.0 for the slurry viscosity ratio indicates that thickening of the slurry composition is suppressed and that the slurry composition has better viscosity stability.
A: Slurry viscosity ratio of less than 1.2
B: Slurry viscosity ratio of not less than 1.2 and less than 1.4
C: Slurry viscosity ratio of not less than 1.4 and less than 1.5
D: Slurry viscosity ratio of 1.5 or more

### <Electrolyte solution injectability>

A negative electrode was cut out as 6 cm × 6 cm and was placed inside a 9 cm × 9 cm aluminum pouch. Thereafter, 0.2 mL of electrolyte solution (solution having the same chemical composition as electrolyte solution used in secondary battery production described further below) was loaded into the aluminum pouch. The aluminum pouch was then sealed by a heat sealer (produced by TOSEI Corporation; product name: Tabletop Vertical Model SV-300GII). The soaking rate of electrolyte solution once 1 minute had passed from straight after sealing was measured using an ultrasonic inspection apparatus (produced by Japan Probe Co., Ltd.; product name: Non-Contact Air Coupled Ultrasonic Inspection System NAUT21) and was evaluated by the following standard. A higher electrolyte solution soaking rate indicates better injectability of electrolyte solution during lithium ion secondary battery production (i.e., that a lithium ion secondary battery has better electrolyte solution injectability).
A: Electrolyte solution soaking rate of 75 volume% or more
B: Electrolyte solution soaking rate of not less than 65 volume% and less than 75 volume%
C: Electrolyte solution soaking rate of less than 65 volume%

### <Low-temperature characteristics>

A lithium ion secondary battery was charged to 4.35 V by 0.2C constant current-constant voltage charging (cut-off: 0.02C) and then discharged to 2.75 V by a 1C constant current method at a temperature of 25°C in order to determine the 1C discharge capacity at 25°C. Next, the lithium ion secondary battery was charged to 4.35 V by 0.2C constant current-constant voltage charging (cut-off: 0.02C) at a temperature of -25°C and then discharged to 2.75 V by a 1C constant current method at a temperature of -10°C in order to determine the 1C discharge capacity at -10°C. These measurements were performed for three cells, and average values of the measured values were calculated. The average value of the 1C discharge capacity at 25°C was taken to be C0, the average value of the 1C discharge capacity at -10°C was taken to be C1, and a capacity retention rate (%) at low temperature was calculated (= C1/C0 × 100) and was evaluated by the following standard. A higher capacity retention rate at low temperature indicates that the lithium ion secondary battery has low resistance even at low temperature and thus has excellent low-temperature characteristics.
A: 85% or more
B: Not less than 75% and less than 85%
C: Not less than 60% and less than 75%
D: Less than 60%

### <Cycle characteristics>

A lithium ion secondary battery was left at rest in a 25°C environment for 24 hours after injection of electrolyte solution. Next, the lithium ion secondary battery was subjected to a charge/discharge operation of charging to a cell voltage of 4.35 V by 0.2C constant current-constant voltage charging (cut-off: 0.02C) and constant current discharging to a cell voltage of 2.75 V, and the initial capacity C0 was measured. In addition, the lithium ion secondary battery was subjected to 100 charge/discharge cycles of charging to a cell voltage of 4.35 V by 1.0C constant current-constant voltage charging (cut-off: 0.02C) and discharging to a cell voltage of 2.75 V by a constant current method in a 25°C environment, and the capacity C1 after 100 cycles was measured. A capacity maintenance rate (%) was calculated (= C1/C0 × 100) and was evaluated by the following standard. A higher capacity maintenance rate indicates that the lithium ion secondary battery has better cycle characteristics.
A: Capacity maintenance rate of 90% or more
B: Capacity maintenance rate of not less than 85% and less than 90%
C: Capacity maintenance rate of not less than 80% and less than 85%
D: Capacity maintenance rate of less than 80%

### (Example 1)

### <Production of conductive material paste>

A disper blade was used to stir (3,000 rpm, 60 minutes) 100 parts of CNTs (average number of walls: 1.2; average diameter: 3.7 nm; G/D ratio: 4.6), 100 parts of sodium carboxymethyl cellulose as a dispersant, 100 parts of carboxyl group-containing CNFs (average diameter: 3.4 nm) as acidic group-containing CNFs, and an appropriate amount of deionized water as a dispersion medium, and then a bead mill in which zirconia beads of 1 mm in diameter were used was used to perform 60 minutes of mixing at a circumferential speed of 8 m/s. Next, the resultant premix was further mixed by the bead mill for 30 minutes to produce a conductive material paste (solid content concentration: 2.0%). The obtained conductive material paste had a pH of 8.0. The volume-average particle diameter D50 and dispersion stability were measured and evaluated for this conductive material paste. The results are shown in Table 1.

Note that upon observation using a transmission electron microscope, it was confirmed that a structure in which the acidic group-containing CNFs were adsorbed to surfaces of the CNTs was included in this conductive material paste.

### <Production of particulate polymer>

A particulate polymer serving as a binder was produced as follows.

A 5 MPa pressure-resistant vessel A equipped with a stirrer was charged with 3.15 parts of styrene, 1.66 parts of 1,3-butadiene, 0.2 parts of sodium lauryl sulfate as an emulsifier, 20 parts of deionized water, and 0.03 parts of potassium persulfate as a polymerization initiator. These materials were thoroughly stirred, were then heated to 60°C to initiate polymerization, and were caused to react for 6 hours to yield seed particles.

After the reaction described above, the temperature was raised to 75°C, and then addition of a mixture of 53.85 parts of styrene, 31.34 parts of 1,3-butadiene, 10.0 parts of acrylic acid, 0.25 parts of tert-dodecyl mercaptan as a chain transfer agent, and 0.35 parts of sodium lauryl sulfate as an emulsifier, which was loaded into a separate vessel B, was initiated with respect to the pressure-resistant vessel A. Simultaneously thereto, addition of 1 part of potassium persulfate as a polymerization initiator was initiated with respect to the pressure-resistant vessel A so as to initiate a second stage of polymerization.

In other words, the overall monomer composition used in production of a particulate polymer was 57 parts of styrene, 33 parts of 1,3-butadiene, and 10 parts of acrylic acid.

Addition of the total amount of a mixture containing this monomer composition was completed at 5.5 hours after the start of the second stage of polymerization. Thereafter, the temperature was raised to 85°C and the reaction was performed for a further 6 hours. Cooling was performed to quench the reaction at the point at which the polymerization conversion rate reached 97%. The resultant mixture containing the polymerized product was adjusted to pH 8 through addition of 5% sodium hydroxide aqueous solution. Unreacted monomer was subsequently removed through thermal-vacuum distillation. Cooling was then performed to yield a water dispersion of a particulate polymer that was water-insoluble.

### <Production of slurry composition for negative electrode>

A planetary mixer equipped with a disper blade was charged with 90 parts of artificial graphite (volume-average particle diameter: 24.5 µm; specific surface area: 3.5 m²/g) as a carbon-based negative electrode active material, 10 parts of SiOₓ as a silicon-based negative electrode active material, and 2.0 parts (in terms of solid content) of an aqueous solution of sodium carboxymethyl cellulose as a thickener. These materials were adjusted to a solid content concentration of 58% with deionized water and were mixed at room temperature for 60 minutes. After mixing, the conductive material paste obtained as described above was added into the planetary mixer such that the carbon nanotubes were 0.1 parts (in terms of solid content) and was mixed. Next, 1.0 parts (in terms of solid content) of the particulate polymer obtained as described above was added, and the solid content concentration was adjusted to 50% with deionized water to obtain a mixed liquid. The obtained mixed liquid was subjected to defoaming under reduced pressure to yield a slurry composition for a negative electrode having good fluidity. Viscosity stability was evaluated for this slurry composition for a negative electrode. The result is shown in Table 1.

### <Production of negative electrode>

The slurry composition for a negative electrode obtained as described above was applied onto copper foil (current collector) of 16 µm in thickness by a comma coater such as to have a thickness of 105 µm and a coating weight of 10 mg/cm² after drying. The copper foil with the slurry composition for a negative electrode applied thereon was conveyed inside an oven having a temperature of 100°C for 2 minutes and an oven having a temperature of 120°C for 2 minutes at a speed of 0.5 m/min so as to dry the slurry composition for a negative electrode on the copper foil and obtain a negative electrode web. The negative electrode web was rolled by roll pressing to obtain a negative electrode having a negative electrode mixed material layer thickness of 80 µm. This negative electrode was used to evaluate electrolyte solution injectability of a lithium ion secondary battery. The result is shown in Table 1.

### <Production of positive electrode>

A planetary mixer was charged with 95 parts of LiCoO₂ having a spinel structure as a positive electrode active material, 3 parts in terms of solid content of PVDF (polyvinylidene fluoride) as a binder for a positive electrode, 2 parts of acetylene black as a conductive material, and 20 parts of N-methylpyrrolidone as a solvent, and these materials were mixed to obtain a slurry composition for a positive electrode.

The obtained slurry composition for a positive electrode was applied onto aluminum foil (current collector) of 20 µm in thickness by a comma coater such as to have a thickness after drying of approximately 100 µm. The aluminum foil with the slurry composition for a positive electrode applied thereon was conveyed inside an oven having a temperature of 60°C for 2 minutes and an oven having a temperature of 120°C for 2 minutes at a speed of 0.5 m/min so as to dry the slurry composition for a positive electrode on the aluminum foil and obtain a positive electrode web. The positive electrode web was rolled by roll pressing to obtain a positive electrode having a positive electrode mixed material layer thickness of 70 µm.

### <Preparation of separator>

A separator made of a single layer of polypropylene (width 65 mm, length 500 mm, thickness 25 µm; produced by dry method; porosity: 55%) was prepared. This separator was cut out as a 5 cm × 5 cm square and was used in production of a lithium ion secondary battery described below.

### <Production of secondary battery>

An aluminum packing case was prepared as a battery case. The positive electrode was cut out as a 4 cm × 4 cm square and was arranged with the surface at the current collector-side in contact with the aluminum packing case. Next, the square separator described above was arranged on the surface of the positive electrode mixed material layer of the positive electrode. In addition, the negative electrode was cut out as a 4.2 cm × 4.2 cm square and was arranged on the separator such that the surface at the negative electrode mixed material layer-side faced toward the separator. Thereafter, a LiPF₆ solution of 1.0 M in concentration (solvent: mixed solvent of ethylene carbonate/diethyl carbonate = 1/2 (volume ratio); additives: 2 volume% (solvent ratio) of each of fluoroethylene carbonate and vinylene carbonate) was loaded as an electrolyte solution. The aluminum packing case was then closed by heat sealing at 150°C to tightly seal an opening of the aluminum packing and thereby produce a laminate cell-type lithium ion secondary battery. Low-temperature characteristics and cycle characteristics were evaluated for this lithium ion secondary battery. The results are shown in Table 1.

### (Example 2)

Various productions, measurements, and evaluations were performed in the same way as in Example 1 with the exception that 100 parts of sodium carboxymethyl cellulose as a dispersant was not added in production of the conductive material paste. The results are shown in Table 1.

### (Example 3)

Various productions, measurements, and evaluations were performed in the same way as in Example 1 with the exception that 100 parts of poly(sodium styrenesulfonate) was used instead of 100 parts of sodium carboxymethyl cellulose as a dispersant in production of the conductive material paste. The results are shown in Table 1.

### (Example 4)

Various productions, measurements, and evaluations were performed in the same way as in Example 1 with the exception that 100 parts of CNTs having an average number of walls of 2.3, an average diameter of 4.5 nm, and a G/D ratio of 0.7 were used instead of 100 parts of CNTs having an average number of walls of 1.2, an average diameter of 3.7 nm, and a G/D ratio of 4.6 in production of the conductive material paste. The results are shown in Table 1.

### (Example 5)

Various productions, measurements, and evaluations were performed in the same way as in Example 1 with the exception that the additive amount of the carboxyl group-containing cellulose nanofibers was changed from 100 parts to 300 parts in production of the conductive material paste. The results are shown in Table 1.

### (Example 6)

Various productions, measurements, and evaluations were performed in the same way as in Example 1 with the exception that the additive amount of the carboxyl group-containing cellulose nanofibers was changed from 100 parts to 50 parts in production of the conductive material paste. The results are shown in Table 1.

### (Example 7)

Various productions, measurements, and evaluations were performed in the same way as in Example 1 with the exception that 100 parts of CNTs having an average number of walls of 4.5, an average diameter of 10 nm, and a G/D ratio of 2.8 were used instead of 100 parts of CNTs having an average number of walls of 1.2, an average diameter of 3.7 nm, and a G/D ratio of 4.6 in production of the conductive material paste. The results are shown in Table 1.

### (Example 8)

Various productions, measurements, and evaluations were performed in the same way as in Example 1 with the exception that 100 parts of sulfo group-containing cellulose nanofibers (average diameter: 3.4 nm) were used instead of 100 parts of carboxyl group-containing cellulose nanofibers (average diameter: 3.4 nm) as acidic group-containing CNFs in production of the conductive material paste. The results are shown in Table 1.

### (Comparative Example 1)

Various productions, measurements, and evaluations were performed in the same way as in Example 1 with the exception that 100 parts of carboxyl group-containing cellulose nanofibers (average diameter: 3.4 nm) as acidic group-containing CNFs were not added in production of the conductive material paste. The results are shown in Table 1.

### (Comparative Example 2)

Various productions, measurements, and evaluations were performed in the same way as in Example 2 with the exception that 100 parts of CNTs were not added in production of the conductive material paste. The results are shown in Table 1.

### (Comparative Example 3)

Various productions, measurements, and evaluations were performed in the same way as in Example 1 with the exception that 100 parts of cellulose nanofibers (average diameter: 3.4 nm) that did not include an acidic group such as a carboxyl group or a sulfo group were used instead of 100 parts of carboxyl group-containing cellulose nanofibers (average diameter: 3.4 nm) in production of the conductive material paste. The results are shown in Table 1.

### (Comparative Example 4)

Various productions, measurements, and evaluations were performed in the same way as in Example 1 with the exception that the additive amount of the carboxyl group-containing cellulose nanofibers was changed from 100 parts to 25 parts in production of the conductive material paste. The results are shown in Table 1.

### (Comparative Example 5)

Various productions, measurements, and evaluations were performed in the same way as in Example 1 with the exception that the additive amount of the carboxyl group-containing cellulose nanofibers was changed from 100 parts to 600 parts in production of the conductive material paste. The results are shown in Table 1.

**[Table 1]**

| | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 | Comparative Example 5 |
|---|---|---|---|---|---|---|---|---|---|---|---|---|---|---|---|
| | CNT | Average number of walls | 1.2 | 1.2 | 1.2 | 2.3 | 1.2 | 1.2 | 4.5 | 1.2 | 1.2 | - | 1.2 | 1.2 | 1.2 |
| | | Average diameter (nm) | 3.7 | 3.7 | 3.7 | 4.5 | 3.7 | 3.7 | 10 | 3.7 | 3.7 | - | 3.7 | 3.7 | 3.7 |
| | | G/D ratio | 4.6 | 4.6 | 4.6 | 0.7 | 4.6 | 4.6 | 2.8 | 4.6 | 4.6 | - | 4.6 | 4.6 | 4.6 |
| | | Content [parts by mass] | 100 | 100 | 100 | 100 | 100 | 100 | 100 | 100 | 100 | 0 | 100 | 100 | 100 |
| | | Proportional content relative to all solid content [mass%] | 33 | 50 | 33 | 33 | 20 | 40 | 33 | 33 | 50 | 0 | 33 | 44 | 13 |
| | CNF | Average diameter (nm) | 3.4 | 3.4 | 3.4 | 3.4 | 3.4 | 3.4 | 3.4 | 3.4 | - | 3.4 | 3.4 | 3.4 | 3.4 |
| | | Inclusion of carboxyl group | Yes | Yes | Yes | Yes | Yes | Yes | Yes | No | - | Yes | No | Yes | Yes |
| | | Inclusion of sulfo group | No | No | No | No | No | No | No | Yes | - | No | No | No | No |
| Conductive material paste | | Content [parts by mass] | 100 | 100 | 100 | 100 | 300 | 50 | 100 | 100 | 0 | 100 | 100 | 25 | 600 |
| | | Proportional content relative to all solid content [mass%] | 33 | 50 | 33 | 33 | 60 | 20 | 33 | 33 | 0 | 100 | 33 | 11 | 75 |
| | Dispersant | Type | CMCNa | - | PSSNa | CMCNa | CMCNa | CMCNa | CMCNa | CMCNa | CMCNa | - | CMCNa | CMCNa | CMCNa |
| | | Content [parts by mass] | 100 | 0 | 100 | 100 | 100 | 100 | 100 | 100 | 100 | 0 | 100 | 100 | 100 |
| | | Proportional content relative to all solid content [mass%] | 33 | 0 | 33 | 33 | 20 | 40 | 33 | 33 | 50 | 0 | 33 | 44 | 13 |
| | Mass ratio (CNF/CNT) | | 1 | 1 | 1 | 1 | 3 | 0.5 | 1 | 1 | 0 | - | 1 | 0.25 | 6 |
| | Volume-average particle diameter D50 | | 12 | 26 | 9 | 7 | 4 | 15 | 6 | 14 | 17 | 19 | 84 | 12 | 35 |
| Evaluation results | | Dispersion stability of conductive material paste | A | c | A | A | A | A | A | A | A | A | D | A | A |
| | | Viscosity stability of slurry composition | A | B | A | A | A | A | A | A | B | A | D | A | A |
| | | Electrolyte solution injectability | A | A | A | A | A | B | A | A | C | A | B | B | A |
| | | Low-temperature characteristics | A | B | A | A | A | A | A | A | D | C | D | D | B |
| | | Cycle characteristics | A | B | A | B | B | B | C | A | A | D | D | B | D |

Abbreviations used in the table are as follows.
CNT: Carbon nanotubes
CNF: Cellulose nanofibers
CMCNa: Sodium carboxymethyl cellulose
PSSNa: Poly(sodium styrenesulfonate)

It can be seen from Table 1 that a secondary battery having excellent electrolyte solution injectability, low-temperature characteristics, and cycle characteristics can be produced using the conductive material pastes of Examples 1 to 8, which each contain CNTs, acidic group-containing CNFs, and water and have a mass ratio of the acidic group-containing CNFs relative to the CNTs (acidic group-containing CNFs/CNTs) that is within a specific range.

In contrast, it can be seen that electrolyte solution injectability and low-temperature characteristics of a secondary battery are poor when using the conductive material paste of Comparative Example 1, which does not contain acidic group-containing CNFs.

It can also be seen that low-temperature characteristics and cycle characteristics of a secondary battery are poor when using the conductive material paste of Comparative Example 2, which does not contain CNTs.

It can also be seen that low-temperature characteristics and cycle characteristics of a secondary battery are poor when using the conductive material paste of Comparative Example 3 in which CNFs that do not include an acidic group are used instead of acidic group-containing CNFs.

It can also be seen that low-temperature characteristics of a secondary battery are poor when using the conductive material paste of Comparative Example 4 in which the mass ratio of acidic group-containing CNFs relative to CNTs (acidic group-containing CNFs/CNTs) is less than a specific range.

It can also be seen that cycle characteristics of a secondary battery are poor when using the conductive material paste of Comparative Example 5 in which the mass ratio of acidic group-containing CNFs relative to CNTs (acidic group-containing CNFs/CNTs) exceeds a specific range.

### INDUSTRIAL APPLICABILITY

According to the present disclosure, it is possible to provide a conductive material paste for a non-aqueous electrolyte solution secondary battery that is capable of providing a non-aqueous electrolyte solution secondary battery having excellent electrolyte solution injectability, low-temperature characteristics, and cycle characteristics.

Moreover, according to the present disclosure, it is possible to provide a slurry composition for a non-aqueous electrolyte solution secondary battery negative electrode that is capable of providing a non-aqueous electrolyte solution secondary battery having excellent electrolyte solution injectability, low-temperature characteristics, and cycle characteristics.

Furthermore, according to the present disclosure, it is possible to provide a negative electrode for a non-aqueous electrolyte solution secondary battery that is capable of providing a non-aqueous electrolyte solution secondary battery having excellent electrolyte solution injectability, low-temperature characteristics, and cycle characteristics.

Also, according to the present disclosure, it is possible to provide a non-aqueous electrolyte solution secondary battery that has excellent electrolyte solution injectability, low-temperature characteristics, and cycle characteristics.

## Claims

1. A conductive material paste for a non-aqueous electrolyte solution secondary battery comprising carbon nanotubes, acidic group-containing cellulose nanofibers, and water, wherein a mass ratio of the acidic group-containing cellulose nanofibers relative to the carbon nanotubes, in terms of acidic group-containing cellulose nanofibers/carbon nanotubes, is not less than 0.3 and not more than 4.

2. The conductive material paste for a non-aqueous electrolyte solution secondary battery according to claim 1, wherein the carbon nanotubes have an average number of walls of 2.5 or less.

3. The conductive material paste for a non-aqueous electrolyte solution secondary battery according to claim 1, comprising a structure in which the cellulose nanofibers are adsorbed to surfaces of the carbon nanotubes.

4. The conductive material paste for a non-aqueous electrolyte solution secondary battery according to claim 1, wherein the acidic group-containing cellulose nanofibers include either or both of a carboxyl group and a sulfo group.

5. The conductive material paste for a non-aqueous electrolyte solution secondary battery according to claim 1, further comprising a dispersant including either or both of a carboxyl group and a sulfo group.

6. The conductive material paste for a non-aqueous electrolyte solution secondary battery according to claim 1, wherein the carbon nanotubes have a G/D ratio of G band peak intensity relative to D band peak intensity of 2.1 or more in a Raman spectrum.

7. The conductive material paste for a non-aqueous electrolyte solution secondary battery according to claim 1, wherein the acidic group-containing cellulose nanofibers have an average diameter of not less than 2 nm and not more than 30 nm.

8. The conductive material paste for a non-aqueous electrolyte solution secondary battery according to claim 1, wherein the carbon nanotubes have an average diameter of not less than 1.5 nm and not more than 8.0 nm.

9. The conductive material paste for a non-aqueous electrolyte solution secondary battery according to claim 1, wherein a volume-average particle diameter D50 of particles contained in the conductive material paste for a non-aqueous electrolyte solution secondary battery is not less than 0.5 µm and not more than 20.0 µm.

10. The conductive material paste for a non-aqueous electrolyte solution secondary battery according to claim 1, wherein the mass ratio of the acidic group-containing cellulose nanofibers relative to the carbon nanotubes, in terms of acidic group-containing cellulose nanofibers/carbon nanotubes, is not less than 0.6 and not more than 2.

11. A slurry composition for a non-aqueous electrolyte solution secondary battery negative electrode comprising: the conductive material paste for a non-aqueous electrolyte solution secondary battery according to any one of claims 1 to 10; and a silicon-based active material.

12. A negative electrode for a non-aqueous electrolyte solution secondary battery comprising a negative electrode mixed material layer formed using the slurry composition for a non-aqueous electrolyte solution secondary battery negative electrode according to claim 11.

13. A non-aqueous electrolyte solution secondary battery comprising the negative electrode for a non-aqueous electrolyte solution secondary battery according to claim 12.
